# EUROPEAN PATENT APPLICATION

(11) **EP 2 264 914 A1**
(43) Date of publication of application: **22.12.2010**
(21) Application number: 09163023.6
(22) Date of filing: 17.06.2009
(51) Int. Cl.: H04B 7/08, H04W 72/08, H04B 17/00

(54) **System and method for selecting a signal**

(71) Applicant: ADVANCED DIGITAL BROADCAST S.A., 1292 Chambesy (CH)
(72) Inventor: Piwonski, Juliusz, 65-339, Zielona Gora (PL); Murawski, Mariusz, 65-101, Zielona Gora (PL)
(74) Representative: Pawlowski, Adam

(57) **Abstract**

A method for selecting a signal as a better signal comprises the steps of receiving a first signal from a first source; receiving a second signal from a second source; obtaining an average value AVG_1_SN of selected samples of signal strength-related parameter of the first signal, measured during a time interval T1; obtaining an average value AVG_2_SN of selected samples of signal strength-related parameter of the second signal, measured during a time interval T2; obtaining an average value AVG_1_SQ of selected samples of signal quality-related parameter of the first signal, measured during a time interval T3; obtaining an average value AVG_2_SQ of selected samples of signal quality-related parameter of the second signal, measured during a time interval T4; comparing AVG_1_SQ and AVG_2_SQ and if the comparison results in a difference of less than a predefined threshold, comparing AVG_1_SN and AVG_2_SN and if AVG_1_SN is greater the first signal is selected as a better signal, wherein if AVG_2_SN is greater the second signal is selected a better signal, and if the comparison results in a difference greater than the predefined threshold, selecting the first signal as a better signal when AVG_1_SQ is greater than AVG_2_SQ and selecting the second signal as a better signal when AVG_1_SQ is lower than AVG_2_SQ and outputting the selection.

## Description

The invention presented herein relates generally to a system and a method for selecting a signal. The whole concept can be utilised in signal receivers, which can retrieve the same content from a plurality of sources.

A prior art system disclosed in a U.S. Patent No. 7,120,404 publication, entitled "RADIO RECEPTION SYSTEM WITH AUTOMATIC TUNING", utilizes a vehicle radio reception system, which includes a first receiver that is tuned to receive a signal from a certain transmitter and provide a received signal indicative thereof and a first quality signal indicative of signal strength of the received signal. The radio reception system also includes a second receiver that is automatically scanned through its associated reception range to identify a frequency signal value associated with the transmitter and provide a second quality signal indicative of signal strength of a signal associated with the frequency signal value. The first receiver compares the first quality signal and the second quality signal, and tunes to the frequency signal value if the second quality signal indicates a better signal quality than the first quality signal.The method uses reception field strength or signal-to-noise ratio as measurement criteria for the quality.

Another prior art system disclosed in U.S. Patent No. 5,353,288 publication, entitled "DEVICE FOR SELECTING RECEPTION SIGNALS AS A FUNCTION OF THEIR POWER", utilizes a device for selecting reception signals as a function of their power, the reception signals being identified by their frequency and being structured into frames made up by a number of time slots. Power is calculated for each one of the signals being explored using as a basis measurements carried out on several selected time slots that correspond to the signal during a series of repetitive analysis periods. The selected time slot of the first signal explored during an analysis period bearing a number less than or equal to the number of time slots that make up a frame occupies a different position in the frame from the positions that it occupied during preceding analysis periods.

A drawback of these solutions is that a simple comparison of signal strength or signal-to-noise ratio is not enough when the signals are subject to distortions, such as an increased amount of echo caused by objects and terrain irregularities between the signal transmitters and the receiver. However, the echo is not a value that can be measured in a simple way.

Hence, there exists a problem of how to select a signal as a better signal from a plurality of signals, which may be subject to distortions, such as echo, such that the signal selected as the better signal is more suitable for processing in the receiver than the other signals.

The object of the present invention is a method for selecting a signal as a better signal, comprising the steps of receiving a first signal from a first source; receiving a second signal from a second source; obtaining an average value AVG_1_SN of selected samples of signal strength-related parameter of the first signal, measured during a time interval T1; obtaining an average value AVG_2_SN of selected samples of signal strength-related parameter of the second signal, measured during a time interval T2; obtaining an average value AVG_1_SQ of selected samples of signal quality-related parameter of the first signal, measured during a time interval T3; obtaining an average value AVG_2_SQ of selected samples of signal quality-related parameter of the second signal, measured during a time interval T4; comparing AVG_1_SQ and AVG_2_SQ and if the comparison results in a difference of less than a predefined threshold, comparing AVG_1_SN and AVG_2_SN and if AVG_1_SN is greater the first signal is selected as a better signal, wherein if AVG_2_SN is greater the second signal is selected a better signal, and if the comparison results in a difference greater than the predefined threshold, selecting the first signal as a better signal when AVG_1_SQ is greater than AVG_2_SQ and selecting the second signal as a better signal when AVG_1_SQ is lower than AVG_2_SQ and outputting the selection.

Preferably, the time interval T1 is equal to the time interval T2 and the time interval T3 is equal to the time interval T4. Preferably, the time interval T1 occurs simultaneously with the time interval T2 and the time interval T3 occurs simultaneously with the time interval T4. Preferably, the time intervals T1, T2, T3 and T4 occur simultaneously.

Preferably, the signal quality-related parameter is based on an error rate of the signal. Preferably, the error rate is a pre-Viterbi or post-Viterbi bit error rate (BER), a packet error rate (PER) or a Modulation Error Rate (MER).

Preferably, the signal strength-related parameter is a signal-to-noise ratio or a signal level.

Preferably, the selected samples are all samples.

Preferably, the predefined threshold equals 20% of a range of valid signal quality-related parameter. Preferably, the predefined threshold equals quality measurement error + 10% of a range of valid signal quality-related parameter.

Another object of the invention is a computer program comprising program code means for performing all the steps of the method according to the invention when said program is run on a computer and a computer readable medium having computer-executable instructions performing all the steps of the computer-implemented method according to the invention.

The object of the invention is also a system for selecting a signal as a better signal, the system comprising a signal reception section configured to receive a first signal from a first source and a second signal from a second source; a memory configured to store signal strength-related parameters and signal quality-related parameters of the first and second signal; and a signals comparator configured to select a signal as a better signal according to the method of the invention.

These and other objects of the invention presented herein are accomplished in accordance with the principles of the presented technical concept by providing an improved system and method for selecting a signal. Further details and features of both the system and the method, their nature and various advantages will become more apparent from the accompanying drawing, and the following detailed description of the preferred embodiments shown in the drawing, in which:
FIG. 1 presents a method for selecting a signal;
FIG. 2 depicts a system for selecting a signal.

In order to solve the aforementioned problem, the method according to the invention analyzes both signal strength-related parameters and signal quality-related parameters. In case when the compared signals are of a similar quality, i.e. their error rates are similar, the stronger signal is selected. In contrast, then the compared signals are of a differing quality, i.e. their error rates are substantially different, the signal of a higher quality is selected. Such method discards strong signals which may include substantial echo components reducing signal quality.

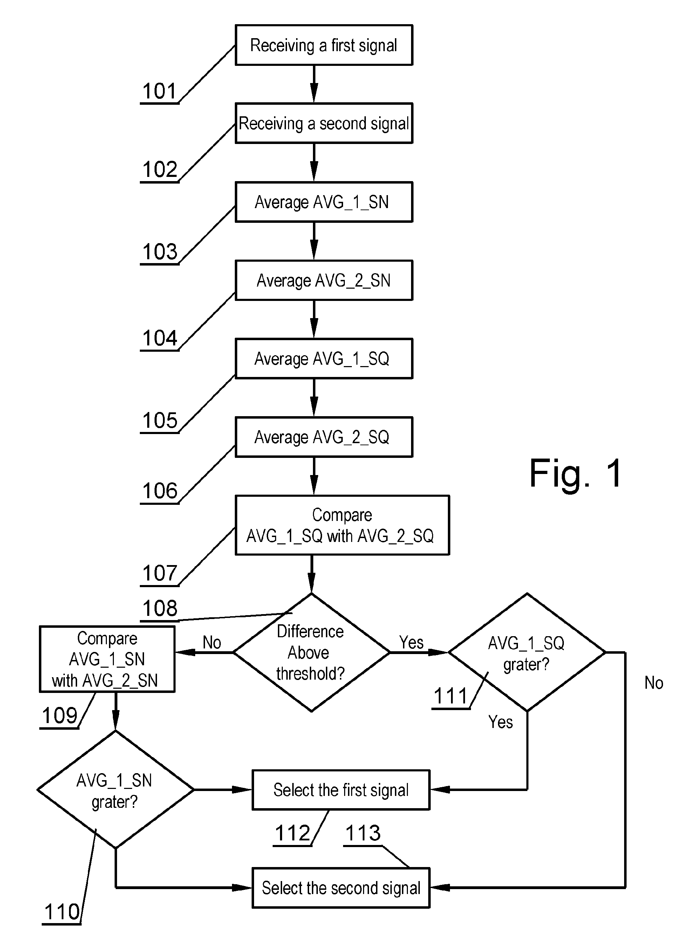

FIG. 1 presents a method for selecting a signal as a better signal according to the invention. The procedure starts in step 101 by receiving a first signal from a first source. In step 102 a second signal is received from a second source. It is to be understood that when a receiver is equipped with more than one signal reception block, the signals may be received and processed simultaneously.

Next, the procedure proceeds to step 103 for obtaining an average value AVG_1_SN of selected samples of signal strength-related parameter, which is for example represented by the signal-to-noise ratio (S/N) or signal level, of the first signal, measured during a time interval T1. Further, in step 104 the same procedure is executed for the second signal, where an average value AVG_2_SN of selected samples of the strength-related parameter of the second signal is obtained during a time interval T2.

In step 105 the system obtains an average value AVG_1_SQ of selected samples of the first signal quality-related parameter, based on the error rate of the first signal, measured during a time interval T3 and in step the system 106 further obtains an average value AVG_2_SQ of selected samples of the second signal quality-related parameter, based on error rate of the second signal, measured during a time interval T4.

Preferably, the time T1 is equal to the time T2 and the time T3 is equal to the time T4, to provide uniform signal measurement conditions for both signals. Alternatively, the times are different to compensate for different properties of signal reception path (such as signal propagation path or signal receiving components within the receiver). Preferably, especially in a case of a system having separate signal reception components for each signal, the measurements of signal parameters are performed simultaneously for all signals. Preferably, signal quality-related parameters and signal strength-related parameters are measured simultaneously to reduce the duration of signal selection.

Additionally it shall be understood that the step of obtaining the signal strength-related parameters and quality-related parameters involves calculating or receiving pre-calculated values from external sources, for example a signal pre-processor connected to the receiver utilising the method according to the present invention.

The selected samples of quality-related parameter or strength-related parameter are some or all samples obtained in each of the measurements of average values. For example, minimum and maximum values may be discarded before an average value is calculated.

When all average values are obtained, in step 107 the procedure compares AVG_1_SQ and AVG_2_SQ. If the comparison results in a difference of less than a predefined threshold in step 108, the method follows to comparing, in step 109, AVG_1_SN and AVG_2_SN and if, in step 110, AVG_1_SN is determined to be greater, the first signal is selected as a better signal in step 112, wherein if AVG_2_SN is greater, the second signal is selected a better signal in step 113. Otherwise, if the comparison in step 108 results in a difference greater than the predefined threshold, the method follows to selecting the first signal as a better signal in step 112 when AVG_1_SQ is determined in step 111 to be greater than AVG_2_SQ, and selecting the second signal as a better signal in step 113, when AVG_1_SQ is lower than AVG_2_SQ.

In the comparisons the predefined threshold preferably equals 20% of a range of valid signal quality-related parameter. In another embodiment the predefined threshold equals quality measurement error + 10% of a range of valid signal quality-related parameter.

In order to obtain a range of valid signal quality-related parameter one needs to establish a quality range for measured signal quality-related parameter values. For example 0 - 255. In such a case 20% of that range equals 51.

The quality measurement error arises from precision of measurements of external components such as components used in RF path, such as a tuner, inductors and/or capacitors. The quality measurement error may also arise from the fact that the measurements take place at fixed times whereas a real signal changes constantly.

In case where the quality measurement error is used to define the threshold, the quality measurement error may be established by taking numerous measurements of a constant signal.

Finally the designation of the signal selected as the better signal is output and the procedure of selecting a signal ends.

The signal quality-related parameter specified as an error rate can be measured at various stages of signal processing. It can be either of a group of pre-Viterbi bit error rate (BER), post-Viterbi BER, packet error rate (PER) or Modulation Error Rate (MER).

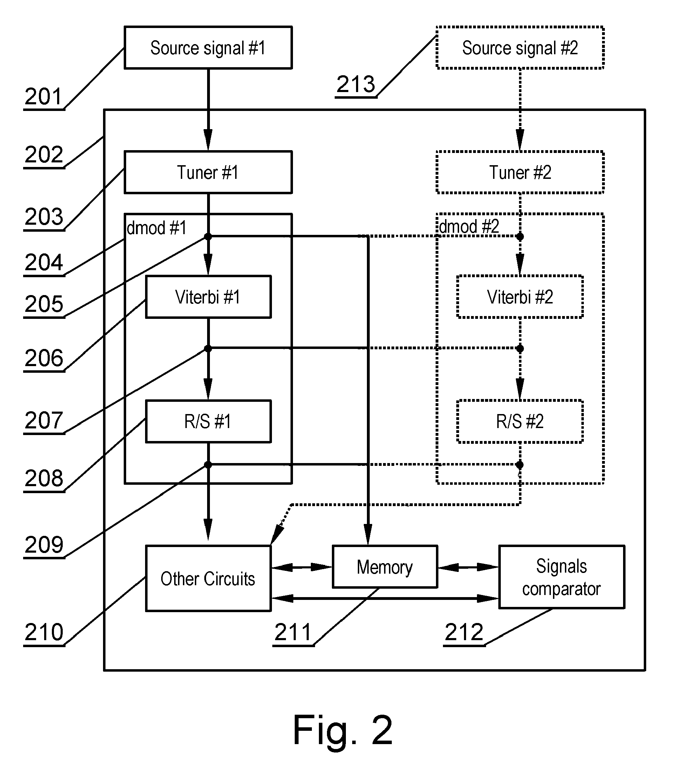

FIG. 2 depicts a system for selecting a signal as a better signal according to the invention. A receiver 202 comprises at least one signal reception section that is able to receive an input signal 201. In other embodiments the receiver may comprise more signal reception sections to receive more input signals 202. When the signal 201 enters the receiver, its level can be measured.

Subsequently, the input signal enters a tuner 203 and when the tuner 203 is tuned to a given frequency, the received data are transferred to a demodulator 204. At point 205 of the signal path, a signal-to-noise ratio can be measured, and/or a pre-Viterbi BER or MER of the signal can be measured.

The data are passed further to a Viterbi decoder 206. When the data leave the Viterbi decoder 206, at point 207 of the signal path a post-Viterbi BER can be measured, before the data enter a Reed-Solomon decoder 208.

It is to be noted that the pre-Viterbi BER is calculated by the Viterbi decoder 206, when the Viterbi decoder is aware of the number of errors present at point 205 of the signal path. Accordingly, the post-Viterbi BER measured at point 207 of the signal path is known only after the Reed-Solomon decoder reports its status.

After the signal is output by the Reed-Solomon decoder 208, at point 209 of the signal path a packet error rate can be measured. All results of measurements are stored in a memory 211. A signals comparator 212 reads all signal parameters measured for at least two signals and communicates the comparison results to other circuits 210, which further process the data.

The signals comparator 212 operates according to the method shown in FIG. 1.

The system and method for selecting a signal have been presented by means of a preferred embodiment where two signals are analyzed, but it can be easily recognised that the system can be expanded to a plurality of signals.

It can be easily recognised, by one skilled in the art, that the aforementioned systems and methods for content recommendation may be performed and/or controlled by one or more computer programs comprising program code means.

Such computer programs are typically executed by utilizing the computing resources in a computing device such as personal computers, personal digital assistants, cellular telephones, receivers and decoders of digital television or the like. Applications are stored in or on a computer readable medium for example a non-volatile memory, such as a flash memory, hard-disk drive or volatile memory, for example RAM and are executed by a processor. These memories are exemplary recording media for storing computer programs comprising computer-executable instructions performing all the steps of the computer-implemented method according the technical concept presented herein.

The technique of the present invention may be implemented using any display, for example on a mobile phone, PDA's, portable computer or a desktop PC.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the invention. The presented preferred embodiments are exemplary only, and are not exhaustive of the scope of the invention presented herein. Accordingly, the scope of protection is not limited to the preferred embodiments described in the specification, but is only limited by the claims that follow.

## Claims

1. A method for selecting a signal as a better signal, the method comprising the steps of
- receiving a first signal from a first source;
- receiving a second signal from a second source;
wherein the method is **characterised in that** it further comprises the steps of
- obtaining an average value AVG_1_SN of selected samples of signal strength-related parameter of the first signal, measured during a time interval T1;
- obtaining an average value AVG_2_SN of selected samples of signal strength-related parameter of the second signal, measured during a time interval T2;
- obtaining an average value AVG_1_SQ of selected samples of signal quality-related parameter of the first signal, measured during a time interval T3;
- obtaining an average value AVG_2_SQ of selected samples of signal quality-related parameter of the second signal, measured during a time interval T4;
- comparing AVG_1_SQ and AVG_2_SQ and
- if the comparison results in a difference of less than a predefined threshold
- comparing AVG_1_SN and AVG_2_SN and if AVG_1_SN is greater the first signal is selected as a better signal, wherein if AVG_2_SN is greater the second signal is selected a better signal
- if the comparison results in a difference greater than the predefined threshold
- selecting the first signal as a better signal when AVG_1_SQ is greater than AVG_2_SQ and selecting the second signal as a better signal when AVG_1_SQ is lower than AVG_2_SQ
- outputting the selection.

2. The method according to claim 1 **characterised in that** the time interval T1 is equal to the time interval T2 and the time interval T3 is equal to the time interval T4.

3. The method according to claim 1 **characterised in that** the time interval T1 occurs simultaneously with the time interval T2 and the time interval T3 occurs simultaneously with the time interval T4.

4. The method according to claim 1 **characterised in that** the time intervals T1, T2, T3 and T4 occur simultaneously.

5. The method according to claim 1 **characterised in that** the signal quality-related parameter is based on an error rate of the signal.

6. The method according to claim 5 **characterised in that** the error rate is a pre-Viterbi or post-Viterbi bit error rate (BER)

7. The method according to claim 5 **characterised in that** the error rate is a packet error rate (PER) or a Modulation Error Rate (MER).

8. The method according to claim 1 **characterised in that** the signal strength-related parameter is a signal-to-noise ratio or a signal level.

9. The method according to claim 1 **characterised in that** the selected samples are all samples.

10. The method according to claim 1 **characterised in that** the predefined threshold equals 20% of a range of valid signal quality-related parameter.

11. The method according to claim 1 **characterised in that** the predefined threshold equals quality measurement error + 10% of a range of valid signal quality-related parameter.

12. A computer program comprising program code means for performing all the steps of the method as claimed in any of claims 1 to 11 when said program is run on a computer.

13. A computer readable medium having computer-executable instructions performing all the steps of the computer-implemented method according to any of claims 1 to 11.

14. A system for selecting a signal as a better signal, the system comprising:
- a signal reception section (203-208) configured to receive a first signal from
a first source and a second signal from a second source;
**characterized in that** the system further comprises
- a memory (211) configured to store signal strength-related parameters and signal quality-related parameters of the first and second signal;
- a signals comparator (212) configured to select a signal as a better signal according to the method of claims 1-11.
